Europäisches Patentamt

(19) European Patent Office

Office européen des brevets

(11) Publication number: **0 233 920
B1**

(12) **EUROPEAN PATENT SPECIFICATION**

(45) Date of publication of patent specification: **23.01.91**

(21) Application number: **86905115.1**

(22) Date of filing: **11.08.86**

(86) International application number:
**PCT/US86/01661**

(87) International publication number:
**WO 87/01194 26.02.87 Gazette 87/05**

(51) Int. Cl.⁵: **G 01 B 11/00,** G 01 S 17/00,
G 01 D 11/00

(54) **RAPID THREE-DIMENSIONAL SURFACE DIGITIZER.**

(30) Priority: **12.08.85 US 764302
26.08.85 US 769442**

(43) Date of publication of application:
**02.09.87 Bulletin 87/36**

(45) Publication of the grant of the patent:
**23.01.91 Bulletin 91/04**

(84) Designated Contracting States:
**DE FR GB**

(56) References cited:
**FR-A-2 519 138
GB-A-2 017 446
US-A-4 089 608
US-A-4 373 804**

**IEEE Transactions on Pattern Analysis &
Machine Intelligence, vol. PAMI-4, no. 6,
November 1982, (New York, US), Y. Sato et al.:
"Shape measurement of curved objects using
multiple slit-ray projections", pages 641-646
Patents Abstracts, vol. 8, no. 269 (P-319) (1706),
8 December 1984, & JP A 59137872**

(73) Proprietor: **Cyberware Laboratory Inc
8 Harris Court
No.3D Monterey, CA 93940 (US)**

(72) Inventor: **Addleman, Lloyd Andrew
Burns Creek
Big Sur, California 93920 (US)**
Inventor: **Addleman, David Andrew
721 Lobos Avenue
Pacific Grove, California 93950 (US)**

(74) Representative: **Marshall, Monica Anne et al
GALLAFENT & CO. 8 Staple Inn
London WC1V 7QH (GB)**

Courier Press, Leamington Spa, England.

## Description

This invention relates to non-contact surface mensuration methods and apparatus which provide data to digital computers and more particularly apparatus capable of high sampling rates so that movement of the surface, such as occurs with live subjects, can be accommodated.

Surface mensuration apparatus has been limited to use on inanimate subjects due to known methods being inherently slow. In order to make a high resolution measurement of the surface of a living subject, such as the human head, measurement rates greater than 10,000 samples per second are required. At these high rates samples can be collected before movement of the subject causes excessive distortion in the image.

Mechanical scanning apparatus are disclosed in US Patent Specification US—A—4373804 and French Patent Specification FR—A—2519138. In FR—A—2519138, a light source directs a plane of light onto a three-dimensional object positioned on a rotatable table. A camera and associated processing apparatus is used to determined coordinates of points along a contour line formed by the intersection of the light plane with the object surface. US—A—4373804 discloses a similar arrangement to FR—A—2519138 which includes a compensation arrangement which comprises a video delay for providing threshold gain adjustment.

A second problem associated with optical non-contact apparatus is the shadowing of the light beam or obstruction of the sensor's view by features of the subject surface. US Patent Specification US—A—4089608 discloses an arrangement which suffers from this limitation.

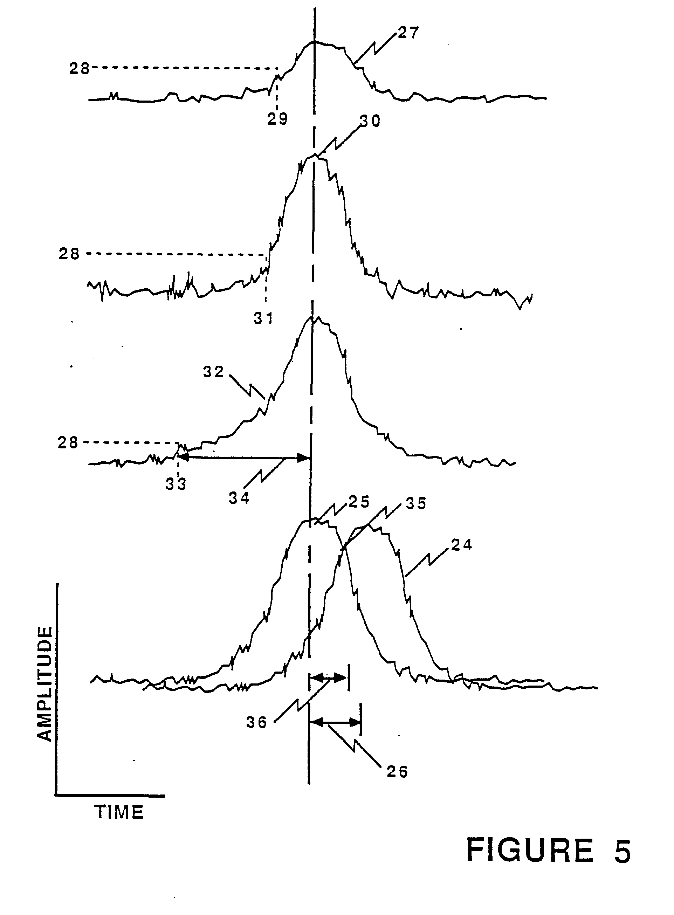

A third problem is the determination of the exact location of a light spot. The high sampling rate requirement for animate subjects necessitates a non-mechanical scanning sensor such as a television camera and the location determination becomes a pulse timing measurement on the camera's video signal. Earlier timing measurements relied on either simple amplitude thresholds or differentiation of the signal amplitude to determine the slope reversal occurring at maximum. Amplitude threshold methods result in large errors as the signal amplitude varies. This is especially prevalent when measuring surfaces of animate subjects. Furthermore, light diffuses through the flesh, yielding a return beam having a beam width many times the width of the incident beam and at a lower intensity level. In order to respond to the low levels of light reflected from hair or unfavourable surface slopes, the threshold must be set close to the detector noise level. Under these conditions the threshold will be reached much too soon, along the broad base of the light response curve. These errors are illustrated in Figure 5. A low level reflection profile is shown by curve 27. The threshold level is set at an amplitude 28 and measures the point where the curve 27 crosses the threshold 28 at time 29, while the optimum point is at the response curve maximum. A larger response is shown by curve 30 and the threshold 28 indicates the crossover point to be at time 31. If the light reflects from human flesh, additional broadening at the base will occur as shown by curve 32 and the measured time will be denoted by point 33, giving an error shown by time 34.

Non-linear amplifiers may be used to eliminate these errors but although helpful, do not provide sufficient compensation. Furthermore, they tend to suppress the sharpness of the response curve. Automatic gain control systems can also be used but these need more than one signal response for each point, requiring more time than is available for live subjects.

Curve slope change sensing can be done at high speed but is basically a high pass filter which has the disadvantage that the signal to noise ratio deteriorates, thereby limiting the dynamic range. High levels of incident light might be used to avoid the weak reflection region but have the result of involuntary movements of the human subject when the light is near the eyes, and do not reduce the total dynamic range requirement.

It is an object of the present invention to minimise the time required to collect the surface samples.

It is another object of the present invention to provide a geometry and signal processing method which ameliorates the shadowing problems of complex surfaces.

It is another object of the present invention to accommodate the wide dynamic range of reflected light from live subjects without loss of resolution or time.

In accordance with the present invention, there is provided apparatus for performing high speed non-contacting mensuration of three dimensional surfaces as described above, characterised in that the processing means includes an amplitude insensitive trigger circuit.

The invention provides one or more thin planes of light which illuminate the three dimensional surface of a subject providing at least one contour line on the surface of the subject. The contour lines are viewed from one or more points an acute angle away from the light planes by a scanning optical sensor, for example a video camera. Part of the apparatus provides for moving the subject relative to the light projection and sensing assembly so that the entire surface of the interest may be sampled.

The coordinates of points on the subject surface can be derived from the image of the contour curve on the sensor and the position of reference points relative to the light projection and sensing assembly.

The scanning sensor detects points along the contour curve and digital data are generated which represent the positions of these points on the surface of the sensor. The data along with indexing data are stored sequentially in a computer's memory.

To minimise the volume of data which is stored during the exposure of the subject, only one coordinate is stored. The other coordinates of the point may be derived from the relative positions of the data in the memory.

Accurate measurement of the contour image position on the sensor is obtained by use of an amplitude insensitive trigger.

Each light plane can be used to measure the subject surface from a different angle and therefore alleviate the shadowing problem encountered if only a single light plane is used.

The light plane need not intersect the axis of a rotating subject, nor does the relative motion of the subject and light plane need to be rotary. The best configuration depends upon the topography of the surface to be measured.

Other objects and advantages of the present invention will become apparent from the following description.

In the drawings:

Figure 1 illustrates the geometry of apparatus for a first embodiment;

Figure 2 represents a typical image at the plane of the video camera sensor of Figure 1;

Figure 3 is a block diagram of the electronic signal processing and synchronisation circuits;

Figure 4 is a schematic representation of an amplitude insensitive trigger circuit;

Figure 5 represents typical input waveforms associated with the trigger circuits of prior art and the present invention;

Figure 6 illustrates the geometry of the apparatus for a second embodiment; and

Figure 7 is a detailed view of the sensor of Figure 6.

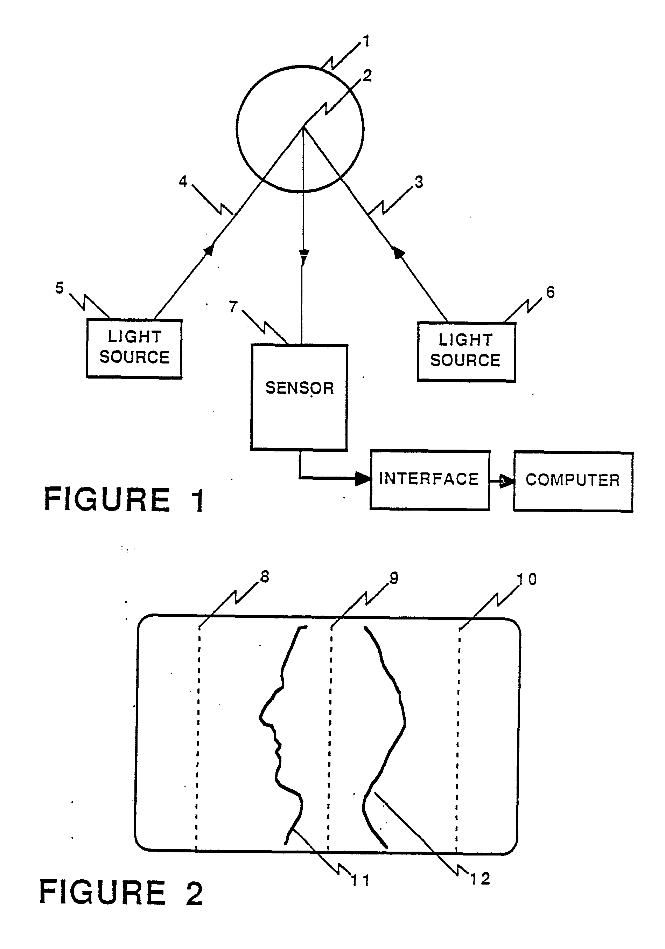

Figure 1 shows one practical embodiment of the invention.

Samples will be collected in cylindrical coordinate form. A rotating table 1 upon which the subject surface is placed has an axis of rotation 2. Intersecting this axis are two thin planes of light 3 and 4 perpendicular to the drawing plane. Light sources 5 and 6 can be incandescent or laser. A video camera sensor 7 views both contour lines generated by the intersections of the light planes and the subject. The angles between light sources and camera 7 are small to allow measurement into narrow depressions of the subject surface. The centre of the field of view of the camera is aligned on the table axis 2.

Figure 2 is a representation of the image field of the camera. The horizontal scan point begins at the upper left boundary 8 and proceeds through the centre of the field 9 to the right boundary 10 retraces and continues downward. Images of the two subject contours are at 11 and 12.

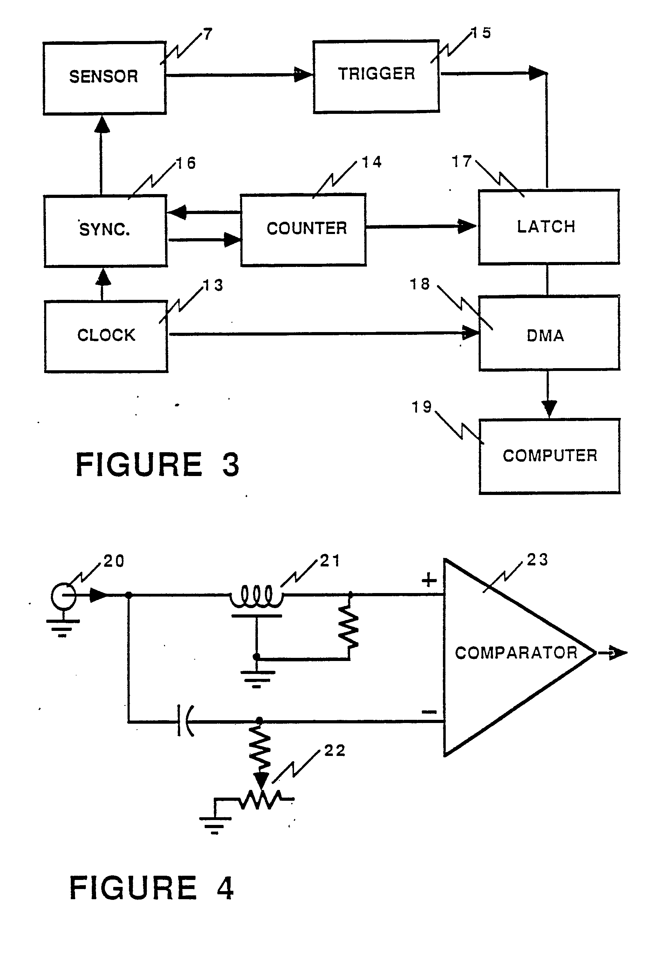

The block diagram of Figure 3 illustrates the electronic circuitry for controlling the video camera sensor 7 and processing the camera output. All operations are timed by a clock 13 through synchronisation circuit 16. During each horizontal sweep an up-down counter 14 counts down from maximum at the beginning of the sweep to zero at the centre or table axis image position and back up to maximum at the horizontal sweep termination. A coincidence between the counter value and a video response from a contour line yields a counter value proportional to the radius of that surface point on the subject. The most straightforward scanning system avoids the commonly used interlaced video scanning giving a single video field per frame. With this single field the point coordinate along the axis of subject rotation is proportional to the vertical deflection or vertical sweep count. The remaining coordinate is directly related to the rotational position of the subject and can be derived from the sequential frame position. It is not necessary to synchronise the table rotation as long as its velocity is constant and the precise start and end of one revolution is known.

The video signal outputs of the video camera sensor have a wide range of amplitude and are frequently asymmetrical due to variations in the reflectivity and slope of the subject surface. If a high accuracy measurement of radius is to be achieved special treatment of the camera video is required.

The effect of amplitude variation on the time measurement can be greatly reduced by a technique that compares the video to a slightly delayed but otherwise high fidelity copy of itself.

Figure 4 illustrates the amplitude insensitive trigger circuit. The camera video 20 is divided into two equal parts, one of which is delayed by delay line 21 and then applied to one input of a high speed voltage comparator 23. The sum of the undelayed video and an adjustable bias signal 22 is applied to the other input. Figure 5 illustrates the relationship between the two signals. The comparator will provide an output whenever the amplitude of the delayed signal 24 exceeds that of the undelayed signal 25. The undelayed video amplitude of 25 will exceed the delayed video amplitude of 24 until the two curves cross measuring the spot to be at 35. For responses that are symmetrical about their tops, the error 36 is a constant at one-half the delay of 26 and so is easily subtracted out in later processing by the computer. The bias adjustment adjusts the two signals relative to one another so that sensitivity can be set above system noise.

Returning to Figure 3, the output of the amplitude insensitive trigger 15 enables the latch 17 causing the counter 14 value to be stored.

To maximise data handling speed the radius data are packed into the word size of the computer 19. This word of data is then passed to a direct memory access circuit 18 which stores it in the computer random access memory.

The process continues while the subject rotates one full turn. Frame synchronisation data can be stored in the computer memory, provided that the highest value of radius does not vary substantially between frames, by reserving the highest value radius reading for that purpose, and storing it immediately preceding or following the data for each frame.

Another embodiment has several advantages over the first:

a) The two images are combined optically before the introduction of system noise, doubling the sensitivity.

b) The images can also be more precisely added optically than electronically.

c) There is no ambiguity for points lying behind the rotation axis if only one light plane is used.

d) Both views of a surface point are digitised at the same instant so the effect of movement of a live subject is minimised.

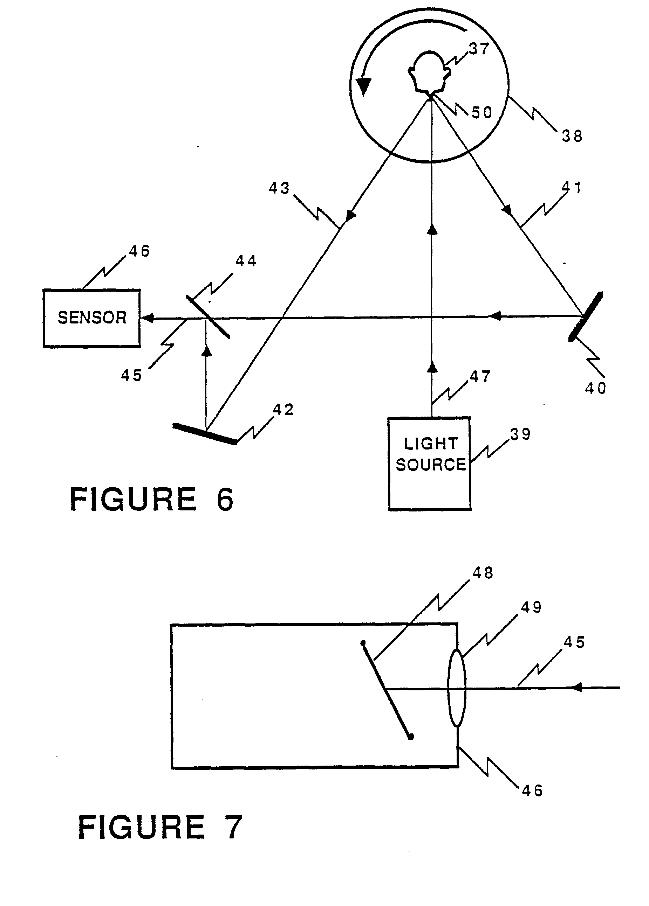

With reference to Figure 6, the subject 37 whose surface is to be measured is placed on a rotating table 38. A light source 39 generates a thin plane of light 47 perpendicular to the plane of the Figure. The contour line generated by the intersection of the light plane and the subject surface is viewed from a small angle away from the light plane by mirrors 40 and 42. The path of light 41 from point 50 on the contour line is reflected from mirror 40, passes through the beamsplitter 44 to the sensor 46. A second light path 43 from the same point 50 is reflected by mirror 42 and the surface of beamsplitter 44 to the sensor 46. The combined images follow light path 45.

For the embodiment of Figure 6 to function properly, three conditions must be satisfied:

1) The viewing angles between the mirrors and the light plane must be equal.

2) For a given point on the contour line (the intersection between the incident plane of light and the surface being measured), the path lengths between that point on the contour line to the sensor must be equal.

3) There must be an additional reflection, therefore image reversal, in one path.

These conditions are readily met by mounting the reflecting surfaces and camera imaging surface perpendicular to the plane of Figure 6 and adjusting the lengths of the paths.

Light ray tracing will show that all points lying in the contour line will coincide at the beamsplitter 44 and sensor 46 if the above conditions are met. It follows that the illuminated contours will coincide for all surfaces although one path may be shadowed by an unfavourable slope with respect to one mirror's view.

With reference to Figure 7, because the two light path lengths vary in a regular manner as a function of the radius coordinate of the surface, the depth of field error of sensor lens 49, can be compensated for by tilting the focal plane 48 of the sensor.

The associated electronic system is the same for both embodiments.

More than the two viewing directions can be combined by iteration of either preferred embodiment.

## Claims

1. Apparatus for performing high speed non-contacting mensuration of three dimensional surfaces comprising illumination means (5, 6; 39) for producing at least one plane of light (4, 3; 47), the or each plane of light being directed on to the three dimensional surface to illuminate it, thereby forming a contour line at the intersection of each plane of light (4, 3; 47) with the surface, means for providing relative movement between the surface and the or each plane of light (4, 3; 47), a detector (7; 46) for scanning the surface and providing output signals indicative of light reflected from the surface, processing means (14, 15, 17, 18) for processing the output signals to produce data corresponding to points along the or each contour line, a computer (19) for storing the data transferred to it from the processing means (14, 15, 17, 18), and synchronisation means (13, 16) for timing the scanning of the detector (7; 46) over the surface and for timing the transfer of data to the computer (19), characterised in that the processing means includes an amplitude insensitive trigger circuit (15).

2. Apparatus according to Claim 1, characterised in that the trigger circuit (15) comprises a delay line (21), a direct line, and a comparator (23), and each output signal from the detector (7; 46) is divided into two signal parts, one signal part being directed along the delay line (21) and the other along the direct line to the comparator (23) which detects the crossover point of the two signal parts to provide an amplitude insensitive output signal.

3. Apparatus according to Claim 2, characterised in that the trigger circuit (15) applies a bias signal (22) to the signal part on the direct line prior to comparison in the comparator (23).

4. Apparatus according to Claim 2 or 3, characterised in that the relative movement is a rotation about a fixed axis and in that the processing means includes an up-down counter (14) controlled by the synchronisation means (13, 16), the counter counting down from the maximum value at the start of a horizontal sweep of the detector scan to zero at the centre, and back up to a maximum value at the end of the horizontal sweep, coincidence between the counter value and a point on a contour line providing a counter value proportional to the radial distance of that point from the rotation axis.

5. Apparatus according to any one of Claims 2 to 4, characterised in that the relative movement is a rotation about a fixed axis and in that the illumination means comprises two light sources (5, 6), each producing respective light planes (4, 3), the detector (7) having its field of view aligned with the rotation axis.

6. Apparatus according to any one of Claims 2 to 4, characterised in that the illumination means comprises a single light source (39) producing a plane of light (47), the intersection of the plane of light (47) and the surface (37) being monitored by two mirror elements (40, 42) each positioned on one side of the light plane to direct contour images to optical combining means (44).

7. Apparatus according to Claim 6, characterised in that the optical combining means is a beam splitter (44) which superimposes the contour images viewed by the mirror elements (40, 42) before passing the combined image to the detector (46).

8. Apparatus according to Claim 7, characterised in that the detector (46) includes the focal plane adjustment (48) for correction of depth of field errors.

**Patentansprüche**

1. Vorrichtung zum Durchführen einer nichtkontaktierenden Vermessung mit hoher Geschwindigkeit dreidimensionaler Oberflächen, die aufweist eine Beleuchtungseinrichtung (5, 6; 39) zum Erzeugen mindestens einer Lichtebene (4, 3; 47), wobei die oder jede Lichtebene auf die dreidimensionale Oberfläche gerichtet ist, um sie zu beleuchten, wodurch eine Konturlinie am Schnitt jeder Lichtebene (4, 3; 47) mit der Oberfläche erzeugt wird, eine Einrichtung zum Erzeugen einer Relativbewegung zwischen der Oberfläche und der oder jeden Lichtebene (4, 3; 47), einen Detektor (7; 46) zum Abtasten der Oberfläche und zum Erzeugen von Ausgangssignalen, die das Licht angeben, das von der Oberfläche reflektiert wird, eine Verarbeitungseinrichtung (14, 15, 17, 18) zum Verarbeiten der Ausgangssignale, um Daten entsprechend den Punkten entlang jeder Konturlinie zu erzeugen, einen Computer (19) zum Speichern der Daten, die zu ihm von der Verarbeitungseinrichtung (14, 15, 17, 18) übertragen werden, und eine Synchronisationseinrichtung (13, 16) zum Timen des Abtastens des Detektors (7; 46) über die Oberfläche und zum Timen der Übertragung der Daten zu dem Computer (19), dadurch gekennzeichnet, daß die Verarbeitungseinrichtung eine amplitudenunempfindliche slöseschaltung (15) aufweist.

2. Vorrichtung nach Anspruch 1, dadurch gekennzeichnet, daß die Auslöseschaltung (15) aufweist eine Verzögerungsleitung (21), eine Direktleitung und einen Vergleicher (23), wobei jedes Ausgangssignal des Detektors (7; 46) in zwei Signalanteile aufgeteilt wird, wobei einer der Signalanteile entlang der Verzögerungsleitung (21) fortgeleitet wird und der andere der Signalanteile entlang der Direktleitung zu dem Vergleicher (23) fortgeleitet wird, der den Kreuzungspunkt der zwei Signalanteile detektiert, um ein amplitudenempfindliches Ausgangssignal zu erzeugen.

3. Vorrichtung nach Anspruch 2, dadurch gekennzeichnet, daß die Auslöseschaltung (15) ein Vorspannsignal (22) an den Signalanteil auf der Direktleitung anlegt, und zwar vor dem Vergleich in dem Vergleicher (23).

4. Vorrichtung nach Anspruch 2 oder Anspruch 3, dadurch gekennzeichnet, daß die Relativbewegung eine Drehung um eine festliegende Achse ist und daß die Verarbeitungseinrichtung einen Aufwärts-Abwärtszähler (14) aufweist, der von der Synchronisationseinrichtung (13, 16) gesteuert wird, wobei der Zähler von dem Maximalwert aus beim Beginn eines Horizontalabtastens der Detektorabtastung auf Null beim Zentrum abwärts zählt und wobei der Zähler zurück zu einem Maximalwert am Ende des Horizontalabtastens aufwärts zählt und wobei ein Zusammentreffen zwischen dem Zählerwert und einem Punkt auf einer Konturlinie einen Zählerwert proportional zu dem Radialabstand dieses Punktes von der Drehachse erzeugt.

5. Vorrichtung nach einem der Ansprüche 2 bis 4, dadurch gekennzeichnet, daß die Relativbewegung eine Drehung um eine festliegende Achse ist und daß die Beleuchtungseinrichtung zwei Lichtquellen (5, 6) aufweist, von denen jede zugeordnete Lichtebenen (4, 3) erzeugt, und daß das Sichtfeld des Detektors (7) bezüglich der Rotationsachse ausgerichtet ist.

6. Vorrichtung nach einem der Ansprüche 2 bis 4, dadurch gekennzeichnet, daß die Beleuchtungseinrichtung eine einzige Lichtquelle (39) zum Erzeugen einer Lichtebene (47) aufweist, daß der Schnitt der Lichtebene (47) und der Oberfläche (37) von zwei Spiegelelementen (40, 42) überwacht wird, von denen jedes auf einer Seite der Lichtebene angeordnet ist, um Konturbilder einer optischen Verknüpfungseinrichtung (44) zuzuführen.

7. Vorrichtung nach Anspruch 6, dadurch gekennzeichnet, daß die optische Verknüpfungseinrichtung ein Strahlteiler (44) ist, der die Konturbilder, die von den Spiegelelementen (40, 42) abgegeben werden, überlagert, bevor das verknüpfte Bild dem Detektor (46) zugeführt wird.

8. Vorrichtung nach Anspruch 7, dadurch gekennzeichnet, daß der Detektor (46) die Brenneebeneneinstellung (48) zum Korrigieren der Tiefe von Feldfehlern aufweist.

**Revendications**

1. Appareil pour effectuer la mesure sans contact et à grande vitesse de surfaces tridimensionnelles, comprenant un moyen d'éclairage (5, 6; 39) pour produire au moins un plan ou lame de lumière (4, 3; 47), le plan lumineux ou chaque plan lumineux étant dirigé sur la surface tridimensionnelle afin de l'éclairer, de manière à former une ligne de contour à l'intersection de chaque plan lumineux (4, 3; 47) avec la surface, un moyen pour produire un mouvement relatif entre la surface et le ou chaque plan lumineux (4, 3; 47), un détecteur (7; 46) pour explorer la surface et fournir des signaux de sortie représentatifs de la lumière réfléchie par la surface, un moyen de traitement (14, 15, 17, 18) pour traiter les signaux de sortie afin de produire des données correspondant à des points situés le long de la ligne de contour ou de chaque ligne de contour, un ordinateur (19) pour stocker les données qui lui sont transférées par le moyen de traitement (14, 15, 17, 18), ainsi qu'un moyen de synchronisation (13, 16) pour synchroniser l'analyse de la surface par le détecteur (7; 46) et pour synchroniser le transfert de données à l'ordinateur (19), caractérisé en ce que le moyen de traitement comporte un circuit de déclenchement (15) insensible à l'amplitude.

2. Appareil selon la revendication 1, caractérisé en ce que le circuit de déclenchement (15) comprend une ligne à retard (21), une ligne directe et un comparateur (23), et chaque signal de sortie du détecteur (7; 46) est divisé en deux parties de signal dont l'une est envoyée par la ligne à retard (21) et l'autre par la ligne directe au comparateur (23), lequel détecte le point de croisement des deux parties de signal afin de délivrer un signal de sortie insensible à l'amplitude.

3. Appareil selon la revendication 2, caractérisé en ce que le circuit de déclenchement (15) applique un signal de polarisation (22) à la partie de signal sur la ligne directe avant la comparaison dans le comparateur (23).

4. Appareil selon la revendication 2 ou 3, caractérisé en ce que le mouvement relatif est une rotation autour d'un axe fixe et que le moyen de traitement comporte un compteur/décompteur (14) commandé par le moyen de synchronisation (13, 16), le compteur opérant un comptage régressif à partir de la valeur maximale au début d'un mouvement de balayage horizontal du processus d'analyse par le détecteur, jusqu'à zéro au centre, puis en retour jusqu'à une valeur maximale à la fin du mouvement de balayage horizontal, la coïncidence entre la position du compteur et un point sur une ligne de contour fournissant une position de compteur proportionnelle à la distance radiale de ce point de l'axe de rotation.

5. Appareil selon l'une quelconque des revendications 2 à 4, caractérisé en ce que le mouvement relatif est une rotation autour d'un axe fixe et que le moyen d'éclairage comprend deux sources lumineuses (5, 6) délivrant chacune un plan lumineux respectif (4, 3), le champ de vision du détecteur (7) étant aligné avec l'axe de rotation.

6. Appareil selon l'une quelconque des revendications 2 à 4, caractérisé en ce que le moyen d'éclairage comprend une seule source lumineuse (39) produisant un plan lumineux (47), l'intersection de ce plan lumineux (47) et de la surface (37) étant surveillée par deux éléments réfléchissants (40, 42) placés de part et d'autre du plan lumineux et servant à envoyer des images de la ligne de contour à un moyen optique de combinaison (44).

7. Appareil selon la revendication 6, caractérisé en ce que le moyen optique de combinaison est un séparateur de faisceau (44) qui superpose les images de la ligne de contour vues par les éléments réfléchissants (40, 42) avant de transmettre l'image combinée au détecteur (46).

8. Appareil selon la revendication 7, caractérisé en ce que le détecteur (46) comporte un réglage du plan focal (48) pour corriger la profondeur d'erreurs de champ.

FIGURE 1

FIGURE 2

# FIGURE 3

SENSOR /7

TRIGGER /15

SYNC. /16

COUNTER /14

LATCH /17

CLOCK /13

DMA /18

COMPUTER /19

# FIGURE 4

/20

/21

/23

COMPARATOR

/22

FIGURE 5

FIGURE 6

FIGURE 7